# FASCICULE DE BREVET EUROPEEN

(11) **EP 1 630 471 B1**
(45) Date de publication et mention de la délivrance du brevet: **12.12.2007**
(21) Numéro de dépôt: 05300656.5
(22) Date de dépôt: 08.08.2005
(51) Int. Cl.: F17C 13/08

(54) **Dispositif de maintien en position d'un conteneur**
Vorrichtung zur Halterung eines Behälters
Position maintaining device for container

(30) Priorité: 23.08.2004 FR 0451889
(43) Date de publication de la demande: 01.03.2006
(73) Titulaire: PEUGEOT CITROËN AUTOMOBILES S.A., 78140 Velizy Villacoublay (FR)
(72) Inventeur: Tixier, Franck, 95100, Argenteuil (FR); Villadier, Bernard, 91370, Verrieres le Buisson (FR); Gapin, Daniel, 92190, Meudon (FR)
(74) Mandataire: Ménès, Catherine

(56) Documents cités:
- DE-A1- 19 528 557
- FR-A- 2 536 373
- US-A1- 2004 075 034

## Description

La présente invention concerne un dispositif de maintien en position d'un conteneur contre un support.

L'invention trouve une application particulièrement avantageuse dans le domaine de l'industrie automobile, et plus spécialement dans celui des véhicules propulsés par un carburant gazeux stocké dans des bouteilles, tel que hydrogène, GNV ou autre, ou dans des véhicules transportant ces mêmes gaz dans des bouteilles.

Les conteneurs transportés, bouteilles de gaz notamment, peuvent connaître des variations de dilatation plus ou moins grandes suivant les températures et les pressions auxquelles ils sont soumis. Du fait que ces conteneurs sont généralement bloqués et maintenus en position dans un support à une extrémité proximale par un système de bridage, on comprend que toutes variations dans leur dimension peuvent provoquer des contraintes dans l'armature du système de bridage par dilatation, fatigue ou usure, pouvant entraîner son endommagement et/ou la rupture des canalisations de distribution des gaz contenus dans ces conteneurs. Un dispositif de maintien en position ayant les caractéristiques du préambule de la revendication indépendante est connu, par exemple du DE 195 28 557, qui représente l'état de la technique le plus proche.

Aussi, un problème technique à résoudre par l'objet de la présente invention est de proposer un dispositif de maintien en position d'un conteneur contre un support à une extrémité proximale dudit conteneur, qui permettrait de compenser la dilatation subie par le conteneur lors de variations de température, de pression ou autre, de manière à garantir en toutes circonstances un maintien constant du conteneur contre son support.

La solution au problème technique posé consiste, selon la présente invention, en ce que ledit dispositif comprend un carter mobile enveloppant au moins partiellement une extrémité distale du conteneur, et un moyen de rappel entre ledit carter et un élément fixe par rapport audit support, le moyen de rappel étant activé lors d'une augmentation de dimension du conteneur de manière à appliquer le carter contre l'extrémité distale du conteneur en direction du support.

Ainsi, lorsque la dimension du conteneur augmente à la suite d'une dilatation par exemple, l'extrémité distale du conteneur se déplace et entraîne le carter mobile, l'extrémité proximale du conteneur étant bloquée contre le support du système de bridage. Le carter mobile étant lié au moyen de rappel, le mouvement d'entraînement appliqué audit carter a pour effet d'activer le moyen de rappel, lequel exerce alors une action inverse tendant à appliquer le carter contre l'extrémité distale du conteneur et, par suite, l'extrémité proximale du conteneur contre le support, assurant ainsi un maintien en position parfait du conteneur dans le système de bridage.

Un autre problème technique que l'invention se propose de résoudre est celui de la compensation des variations géométriques, de longueur notamment, que les conteneurs peuvent subir dues aux dispersions dans les procédés de fabrication utilisés par les différents constructeurs de conteneurs, sans qu'il soit nécessaire d'avoir recours à de nouvelles pièces, ce qui aurait pour effet d'augmenter le coût de l'ensemble.

Ce problème d'interchangeabilité entre conteneurs de dimension variable est résolu, selon l'invention, du fait que ledit moyen de rappel est monté en série avec des moyens de réglage de position du carter par rapport au conteneur.

Selon un mode de réalisation de l'invention, ledit moyen de rappel est un ressort cylindrique monté sur une tige reliant le support audit élément fixe, une première extrémité dudit ressort étant fixe sur ladite tige tandis qu'une deuxième extrémité est solidaire dudit carter.

L'invention prévoit alors que lesdits moyens de réglage de position du carter sont des moyens de coulissement simultané du carter et du ressort le long de ladite tige.

Conformément à une forme particulière de réalisation de l'invention, ladite tige est une tige filetée.

Dans ce cas, il est prévu par l'invention que lesdits moyens de réglage de position sont constitués par un système écrou/contre-écrou disposé contre la première extrémité du ressort et apte à ajuster la position du carter et du ressort le long de ladite tige filetée.

La description qui va suivre en regard ces dessins annexés, donnés à titre d'exemples non limitatifs, fera bien comprendre en quoi consiste l'invention et comment elle peut être réalisée.

La figure 1 est une vue en perspective d'un dispositif de maintien en position d'un conteneur conforme à l'invention.

La figure 2 est une vue de côté du dispositif de la figure 1.

La figure 2a est une vue du dispositif de la figure 2 après dilatation du conteneur.

La figure 2b est une vue du dispositif de la figure 2 après changement de dimension du conteneur.

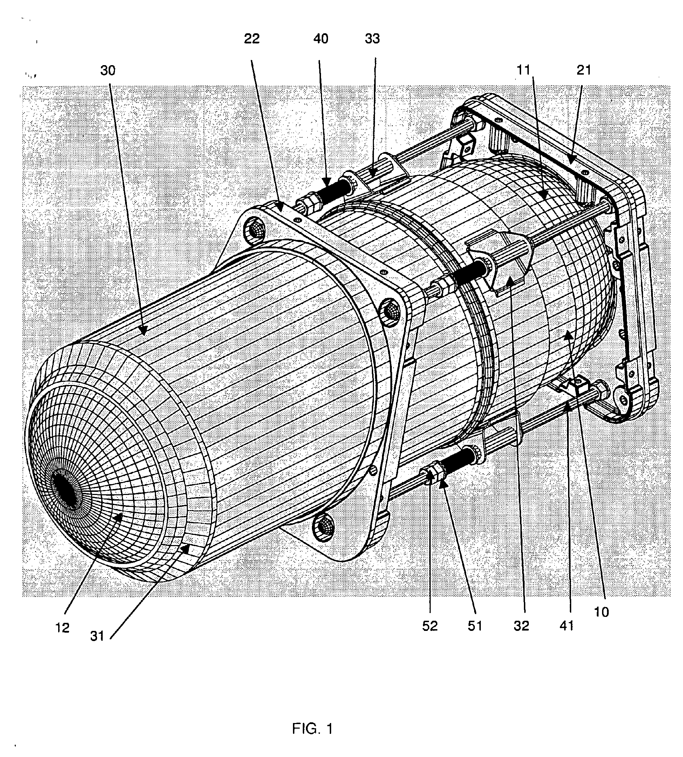

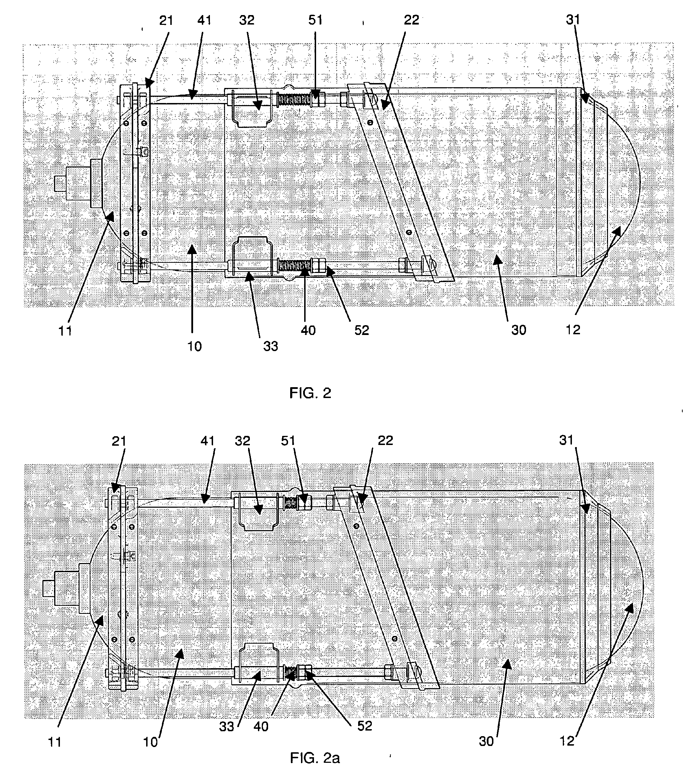

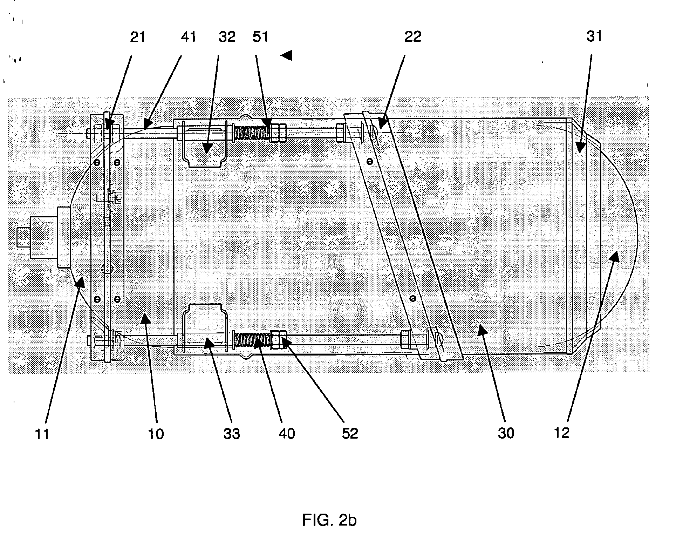

Sur les figures 1 et 2 est représenté un dispositif de maintien en position d'un conteneur 10, une bouteille de gaz par exemple, contre un support 21 à une extrémité proximale 11 du conteneur 10.

Le dispositif montré aux figures 1 et 2 comprend un carter mobile 30 entourant substantiellement le corps du conteneur 10 et enveloppant partiellement l'extrémité distale 12 dudit conteneur. Plus spécialement, dans l'exemple de réalisation des figures 1 et 2, le carter 30 est muni d'un fond 31 sensiblement tronconique, apte à coopérer avec l'extrémité distale 12 de forme arrondie du conteneur 10.

Comme on peut le voir sur les figures 1 et 2, des moyens 40 de rappel sont placés entre le carter 30 et un élément fixe 22 par rapport audit support 21. Ainsi que le montre la figure 2a, lors d'une dilatation du conteneur 10, le déplacement de l'extrémité distale 12 du conteneur 10 entraîne le carter 30 de manière à activer les moyens 40 de rappel qui ont alors pour effet d'appliquer le fond 31 du carter contre le conteneur 10 en direction du support 21, contribuant ainsi à garantir un maintien positif du conteneur 10 contre son support.

Dans le mode de réalisation des figures 1 et 2, ledit élément fixe est un cadre 22 de fixation entourant le carter 30 et relié au support 21 par des tiges 41. Les moyens de rappel sont des ressorts cylindriques 40 respectivement montés sur les tiges 41, une première extrémité des ressorts 40 étant fixe sur les tiges tandis qu'une deuxième extrémité est solidaire du carter 30, ici par l'intermédiaire de pattes 32 fixées au carter par exemple par soudage et coulissant sur la tige 41 correspondante. Dans le mode de réalisation représenté aux figures 1 et 2, les ressorts 40 sont montés de manière à agir en compression lorsque le conteneur 10 se dilate sous l'effet de la température, la pression ou autre.

De manière à assurer un meilleur coulissement sur les tiges 41 les pattes 32 sont munies d'un coulisseau 33.

Afin de pouvoir régler le dispositif de maintien conforme à l'invention en fonction des dimensions du conteneur 10, lesquelles peuvent varier d'un constructeur à l'autre ou subir des dispersions géométriques, les moyens 40 de rappel sont montés en série avec des moyens de réglage de position du carter 30 par rapport au conteneur 10.

Ainsi que le montrent les figures 1 et 2, ces moyens de réglage de position du carter 30 sont des moyens de coulissement simultané du carter et du ressort 40 le long de ladite tige 41.

Dans le mode de réalisation des figures 1 et 2, les tiges 41 sont des tiges filetées et lesdits moyens de réglage de position sont constitués par un système écrou 51/contre-écrou 52 disposé contre la première extrémité des ressorts 40 et apte à ajuster la position du carter 30, à savoir ici les pattes 32, et des ressorts 40 le long de ladite tige.

Comme l'indique la figure 2b, lors du remplacement d'un conteneur par un conteneur plus court, le réglage en position du carter 30 s'effectue en desserrant les contre-écrous 52 et en déplaçant vers la gauche l'ensemble des ressorts 40 et des pattes 32 solidaires du carter 30 jusqu'à appliquer le fond 31 du carter sur l'extrémité distale du conteneur 10. Les écrous 51 sont ensuite amenés par vissage sur les tiges 41 contre les ressorts 40, l'ensemble étant fixé en vissant les contre-écrous 52. Le dispositif de maintien en position du conteneur 10 est alors prêt à opérer en cas de dilatation comme sur la figure 2a.

Une protection souple en élastomère ou autre, non représentée, peut être disposée, par collage par exemple, sur le support 21 et/ou sur le fond 31 du carter 30 afin d'obtenir un meilleur maintien du conteneur 10 dans le cas où celui-ci ne serait pas parfaitement cylindrique.

## Revendications

1. Dispositif de maintien en position d'un conteneur (10) contre un support (21) à une extrémité proximale (11) dudit conteneur (10), **caractérisé en ce que** ledit dispositif comprend un carter mobile (30) pour envelopper au moins partiellement une extrémité distale (12) du conteneur (10), et au moins un moyen (40) de rappel entre ledit carter (30) et un élément fixe (22) par rapport audit support (21), le moyen (40) de rappel étant activé lors d'une augmentation de dimension du conteneur (10) de manière à appliquer le carter (30) contre l'extrémité distale (12) du conteneur (10) en direction du support (21).

2. Dispositif selon la revendication 1, **caractérisé en ce que** ledit moyen (40) de rappel est monté en série avec des moyens de réglage de position du carter (30) par rapport au conteneur (10).

3. Dispositif selon l'une des revendications 1 ou 2, **caractérisé en ce que** ledit moyen de rappel est un ressort (40) cylindrique monté sur une tige (41) reliant le support (21) audit élément fixe (22), une première extrémité dudit ressort (40) étant fixe sur ladite tige (41) tandis qu'une deuxième extrémité est solidaire dudit carter (30).

4. Dispositif selon la revendication 3, **caractérisé en ce que** lesdits moyens de réglage de position du carter (30) sont des moyens de coulissement simultané du carter (30) et du ressort (40) le long de ladite tige (41).

5. Dispositif selon l'une des revendications 3 ou 4, **caractérisé en ce que** ladite tige est une tige filetée (41).

6. Dispositif selon la revendication 5, **caractérisé en ce que** lesdits moyens de réglage de position sont constitués par un système écrou (51)/contre-écrou (52) disposé contre la première extrémité du ressort (40) et apte à ajuster la position du carter (30) et du ressort (40) le long de ladite tige filetée (41).

7. Dispositif selon l'une des revendications 3 à 6, **caractérisé en ce que** ladite deuxième extrémité du ressort (40) est solidaire du carter (30) par l'intermédiaire d'une patte (32) fixée au carter (30) et coulissant sur ladite tige (41).

8. Dispositif selon les revendications 6 et 7, **caractérisé en ce que** lesdits moyens de réglage de position sont constitués par un système écrou (51)/contre-écrou (52) disposé contre la première extrémité du ressort (40) et apte à ajuster la position du ressort (40) et de ladite patte (32) le long de ladite tige filetée (41).

9. Dispositif selon l'une des revendications 7 ou 8, **caractérisé en ce que** ladite patte (32) est munie d'un coulisseau (33) entourant ladite tige (41).

10. Dispositif selon l'une quelconque des revendications 1 à 9, **caractérisé en ce que** ledit carter (30) est muni d'un fond (31) sensiblement tronconique apte à coopérer avec l'extrémité distale du conteneur (10).

11. Dispositif selon l'une quelconque des revendications 1 à 10, **caractérisé en ce que** ledit élément fixe est un cadre (22) de fixation entourant le carter (30).

12. Dispositif selon l'une quelconque des revendications 1 à 11, **caractérisé en ce qu**'une protection souple est disposée sur le support (21) et/ou le fond (31) du carter(30).

## Claims

1. Device for keeping a container (10) in position against a support (21) at a proximal end (11) of the said container (10), **characterized in that** the said device comprises a movable casing (30) to enclose at least partially a distal end (12) of the container (10), and at least one return means (40) between the said casing (30) and an element (22) that is fixed relative to the said support (21), the return means (40) being activated during an increase in the dimension of the container (10) so as to press the casing (30) against the distal end (12) of the container (10) in the direction of the support (21).

2. Device according to Claim 1, **characterized in that** the said return means (40) is mounted in series with means for adjusting the position of the casing (30) relative to the container (10).

3. Device according to one of Claims 1 or 2, **characterized in that** the said return means is a cylindrical spring (40) mounted on a rod (41) connecting the support (21) to the fixed element (22), a first end of the said spring (40) being fixed to the said rod (41) while a second end is fixedly attached to the said casing (30).

4. Device according to Claim 3, **characterized in that** the said means for adjusting the position of the casing (30) are means for simultaneously sliding the casing (30) and the spring (40) along the said rod (41).

5. Device according to one of Claims 3 or 4, **characterized in that** the said rod is a threaded rod (41).

6. Device according to Claim 5, **characterized in that** the said positional adjustment means consist of a nut (51)/lock nut (52) system placed against the first end of the spring (40) and capable of adjusting the position of the casing (30) and of the spring (40) along the said threaded rod (41).

7. Device according to one of Claims 3 to 6, **characterized in that** the said second end of the spring (40) is fixedly attached to the casing (30) by means of a lug (32) fixed to the casing (30) and sliding on the said rod (41).

8. Device according to Claims 6 and 7, **characterized in that** the said positional adjustment means consist of a nut (51)/lock nut (52) system placed against the first end of the spring (40) and capable of adjusting the position of the spring (40) and of the said lug (32) along the said threaded rod (41).

9. Device according to one of Claims 7 or 8, **characterized in that** the said lug (32) is furnished with a traveller (33) surrounding the said rod (41).

10. Device according to any one of Claims 1 to 9, **characterized in that** the said casing (30) is furnished with a substantially frustoconical bottom (31) capable of interacting with the distal end of the container (10).

11. Device according to any one of Claims 1 to 10, **characterized in that** the said fixed element is a fastening frame (22) surrounding the casing (30).

12. Device according to any one of Claims 1 to 11, **characterized in that** a flexible protective element is placed on the support (21) and/or the bottom (31) of the casing (30).

## Patentansprüche

1. Vorrichtung zur Positionsbeibehaltung eines Behälters (10) gegen einen Träger (21) an einem nahen Ende (11) dieses Behälters (10), **dadurch gekennzeichnet, dass** die Vorrichtung ein bewegliches Gehäuse (30) zur zumindest teilweisen Umhüllung eines fernen Endes (12) des Behälters (10) und mindestens ein Rückstellmittel (40) zwischen dem Gehäuse (30) und einem ortsfesten Element (22) bezüglich des Trägers (21) aufweist, wobei das Rückstellmittel (40) bei einer Vergrößerung der Abmessung des Behälters (10) aktiviert wird, um das Gehäuse (30) gegen das ferne Ende (12) des Behälters (10) in Richtung des Trägers (21) anzulegen.

2. Vorrichtung nach Anspruch 1, **dadurch gekennzeichnet, dass** das Rückstellmittel (40) in Reihe mit Einstellmitteln der Position des Gehäuses (30) bezüglich des Behälters (10) angeordnet ist.

3. Vorrichtung nach einem der Ansprüche 1 oder 2, **dadurch gekennzeichnet, dass** das Rückstellmittel eine zylindrische Feder (40) ist, die auf eine Stange (41) montiert ist, die den Träger (21) mit dem ortsfesten Element (22) verbindet, wobei eine erste Ende der Feder (40) an der Stange (41) befestigt ist, während ein zweites Ende fest mit dem Gehäuse (30) verbunden ist.

4. Vorrichtung nach Anspruch 3, **dadurch gekennzeichnet, dass** die Positionseinstellmittel des Gehäuses (30) Mittel zum gleichzeitigen Gleiten des Gehäuses (30) und der Feder (40) entlang der Stange (41) sind.

5. Vorrichtung nach einem der Ansprüche 3 oder 4, **dadurch gekennzeichnet, dass** die Stange eine Gewindestange (41) ist.

6. Vorrichtung nach Anspruch 5, **dadurch gekennzeichnet, dass** die Positionseinstellmittel aus einem System aus Mutter (51) und Gegenmutter (52) bestehen, das gegen das erste Ende der Feder (40) angeordnet und fähig ist, die Position des Gehäuses (30) und der Feder (40) entlang der Gewindestange (41) einzustellen.

7. Vorrichtung nach einem der Ansprüche 3 bis 6, **dadurch gekennzeichnet, dass** das zweite Ende der Feder (40) mittels einer Klammer (32) fest mit dem Gehäuse (30) verbunden ist, die am Gehäuse (30) befestigt ist und auf der Stange (41) gleitet.

8. Vorrichtung nach den Ansprüchen 6 und 7, **dadurch gekennzeichnet, dass** die Positionseinstellmittel aus einem System aus Mutter (51) und Gegenmutter (52) bestehen, das gegen das erste Ende der Feder (40) angeordnet und fähig ist, die Position der Feder (40) und der Klammer (32) entlang der Gewindestange (41) einzustellen.

9. Vorrichtung nach einem der Ansprüche 7 oder 8, **dadurch gekennzeichnet, dass** die Klammer (32) mit einem Schieber (33) versehen ist, der die Stange (41) umgibt.

10. Vorrichtung nach einem der Ansprüche 1 bis 9, **dadurch gekennzeichnet, dass** das Gehäuse (30) mit einem im Wesentlichen kegelstumpfförmigen Boden (31) versehen ist, der mit dem fernen Ende des Behälters (10) zusammenwirken kann.

11. Vorrichtung nach einem der Ansprüche 1 bis 10, **dadurch gekennzeichnet, dass** das ortsfeste Element ein Befestigungsrahmen (22) ist, der das Gehäuse (30) umgibt.

12. Vorrichtung nach einem der Ansprüche 1 bis 11, **dadurch gekennzeichnet, dass** ein biegsamer Schutz auf dem Träger (21) und/oder dem Boden (31) des Gehäuses (30) angeordnet ist.
